# EUROPÄISCHE PATENTSCHRIFT

(11) **EP 0 776 816 B1**
(45) Veröffentlichungstag und Bekanntmachung des Hinweises auf die Patenterteilung: **19.05.1999**
(21) Anmeldenummer: 96118327.4
(22) Anmeldetag: 15.11.1996
(51) Int. Cl.: B62D 55/275

(54) **Aufschiebestück für ein Gleiskettenglied**
Slide-on travelling cushion for a track link
Coussin de roulement enfilable pour un maillon de chenille

(30) Priorität: 29.11.1995 DE 19544458
(43) Veröffentlichungstag der Anmeldung: 04.06.1997
(73) Patentinhaber: Diehl Remscheid GmbH & Co., D-42857 Remscheid (DE)
(72) Erfinder: Erlenmaier, Günter, 34246 Vellmar (DE); Spies, Klaus, 42859 Remscheid (DE)
(74) Vertreter: Hofmann, Gerhard, Dipl.-Ing. Patentassessor

(56) Entgegenhaltungen:
- DE-A- 3 018 143
- DE-B- 1 605 507

## Beschreibung

Die Erfindung betrifft ein Aufschiebestück für ein Gleiskettenglied gemäß dem Oberbegriff des Anspruchs 1.

Ein solches Aufschiebestück für ein Gleiskettenglied ist bspw. aus der DE 33 35 937 C2 bekannt. Dieses bekannte Aufschiebestück ist dazu vorgesehen, auch bei Fahrten in abrassivem Gelände nur einen geringen Verschleiß des Aufschiebestückes zu bewirken. Das wird dort dadurch erreicht, daß die als seitliche Vorsprünge ausgebildeten Führungsorgane des Aufschiebestückes in der vertikalen Erstreckung der Führungsnuten des jeweiligen Gleiskettengliedes senkrecht zur Laufrichtung Spiel haben und im unbelasteten Zustand durch den Elastomerkörper gegen die jeweilige außenseitige Auflagefläche der Führungsnuten gepreßt werden.

Aus dem DE-GM 86 03 070 ist ein Zubehörteil für Gleiskettenglieder, wie ein sog. Schneegreifer, eine Schwimmhilfe, oder ein Laufpolster bekannt, welches mit einem Gleiskettenglied steckverbindbar ist. Dieses Zubehörteil weist auf einer Seite zwei Schenkel zum formschlüssigen Eingreifen in Ausnehmungen von Greiferleisten des Gleiskettengliedes auf. In der Ebene der Ausnehmungen der Greiferleisten sind Schlitze vorgesehen, die zur Aufnahme eines bodenseitig einsteckbaren, an der anderen Greiferleiste einrastbaren Sicherungsbleches dienen. Hier ist also zur Fixierung des Aufschiebestückes an einem zugehörigen Gleiskettenglied ein selbständiges Sicherungsblech erforderlich.

Aufschiebestücke für Gleiskettenglieder, die als sog. Stahlgreifer ausgebildet sind, werden bspw. auch in der DE-Z "Soldat und Technik", 1/1976, Seiten 20 bis 23 beschrieben.

Der Erfindung liegt die Aufgabe zugrunde, ein Aufschiebestück der eingangs genannten Art zu schaffen, das an einem zugehörigen Gleiskettenglied einfach montierbar ist, und das insbes. die Einsatzmöglichkeit von Kettenfahrzeugen im Winterbetrieb auf Straßen und im Gelände verbessert.

Diese Aufgabe wird bei einem Aufschiebestück der eingangs genannten Art erfindungsgemäß durch die Merkmale des Kennzeichenteiles des Anspruchs 1 gelöst. Bevorzugte Aus- bzw. Weiterbildungen des erfindungsgemäßen Aufschiebestückes für ein Gleiskettenglied sind in den Unteransprüchen gekennzeichnet.

Das erfindungsgemäße Aufschiebestück weist den Vorteil auf, daß mittels des Zwischenbleches, das mit dem Gleitschutzträgerkörper des Aufschiebestückes gummielastisch verbunden ist, bzw. durch die aus dem Elastomerkörper seitlich herausragenden Flächenabschnitte des Zwischenbleches eine definierte mechanische Vorspannung in bezug auf das zugehörige Gleiskettenglied gegeben ist, durch welche Abmessungstoleranzen des Gleiskettengliedes bzw. der Führungsnuten des Gleiskettengliedes und des Gleitschutzträgerkörper des Aufschiebestückes ausgeglichen werden. Mit Hilfe der in bezug auf den Gleitschutzträgerkörper gummielastisch vorgesehenen, aus dem Elastomerkörper herausragenden Flächenabschnitte ist folglich ein fester Sitz des Aufschiebestückes am zugehörigen Gleiskettenglied gewährleistet. Durch diesen festen Sitz wird nicht nur die Dauerstandsfestigkeit des Aufschiebestückes erhöht, sondern es werden gleichzeitig auch unerwünschte Klappergeräusche vermieden. Mit erfindungsgemäßen Aufschiebestücken ausgerüstete Gleiskettenglieder eines Kettenfahrzeugs gestatten somit ein sicheres Befahren von Straßen mit relativ hoher Geschwindigkeit, wobei gleichzeitig die Griffigkeit auf verschneiten bzw. vereisten Fahrbahnen bzw. Gelände sowie die Griffigkeit in aufgeweichtem Gelände in vorteilhafter Weise verbessert ist. Beim Einsatz auf vereisten Straßen ergibt sich ein Verkrallen des Aufschiebestückes im Eis und somit ein hohes Maß an Fahrsicherheit. Eine Ansammlung von Packeis oder Packschnee bzw. von Lehm o.dgl. wird durch den Elastomerkörper des erfindungsgemäßen Aufschiebestückes verhindert.

Weitere Einzelheiten, Merkmale und Vorteile ergeben sich aus der nachfolgenden Beschreibung eines in der Zeichnung dargestellten Ausführungsbeispieles des erfindungsgemäßen Aufschiebestückes für ein Gleiskettenglied bzw. der

Einzelteile des erfindungsgemäßen Aufschiebestückes. Es zeigen:
- Fig. 1: einen Schnitt durch ein abschnittweise gezeichnetes Gleiskettenglied in Kombination mit einem in einer Seitenansicht gezeichneten Aufschiebestück,
- Fig. 2: einen Schnitt entlang der Schnittlinie II-II in Fig.1 durch das Aufschiebestück und das Gleiskettenglied,
- Fig. 3: eine Ansicht eines Aufschiebestückes in Blickrichtung von oben, wie es gemäß den Figuren 1 und 2 zur Anwendung gelangt,
- Fig. 4: eine teilweise aufgeschnittene Seitenansicht des Aufschiebestückes gemäß Fig. 3 in Blickrichtung des Pfeiles IV,
- Fig. 5: halbseitig geschnitten eine Vorderansicht des Aufschiebestückes gemäß den Figuren 3 und 4 in Blickrichtung des Pfeiles V in Fig. 3,
- Fig. 6: eine Ansicht eines Zwischenbleches, wie es bei einem Aufschiebestück gemäß den Figuren 1 bis 5 zur Anwendung gelangt, in Blickrichtung von oben,
- Fig. 7: eine Seitenansicht des Zwischenbleches in Blickrichtung des Pfeiles VII in Fig. 6,
- Fig. 8: eine Ansicht eines Gleitschutzträgerkörpers, wie er bei einem Aufschiebestück gemäß den Figuren 1 bis 5 zur Anwendung gelangt, in Blickrichtung von oben,
- Fig. 9: eine Seitenansicht des Gleitschutzträgerkörpers gemäß Fig. 8 in Blickrichtung des Pfeiles IX,
- Fig. 10: eine Vorderansicht des Gleitschutzträgerkörpers gemäß Fig. 8 in Blickrichtung des Pfeiles X,
- Fig. 11: eine der Fig. 10 ähnliche Vorderansicht zur Verdeutlichung des Gleitschutzträgerkörpers sowie eines mit diesem verbundenen federnden Fixierelementes,
- Fig. 12: einen Schnitt entlang der Schnittlinie XII-XII in Fig.11 durch den Gleitschutzträgerkörper und das mit diesem verbundene federnde Fixierelement,
- Fig. 13: eine der Fig. 3 ähnliche Ansicht einer zweiten Ausbildung des Aufschiebestückes,
- Fig. 14: abschnittweise eine der Fig. 4 ähnliche Vorderansicht des Aufschiebestückes gemäß Fig.13,
- Fig. 15: eine Draufsicht auf eine dritte Ausführungsform des Aufschiebestückes,
- Fig. 16: eine Draufsicht auf eine vierte Ausbildung des Aufschiebestückes,
- Fig. 17: eine Draufsicht auf eine fünfte Ausführungsform des Aufschiebestückes,
- Fig. 18: eine Draufsicht auf eine sechste Ausbildung des Aufschiebestückes, und
- Fig. 19: einen Schnitt entlang der Schnittlinie XIX-XIX in Fig. 18.

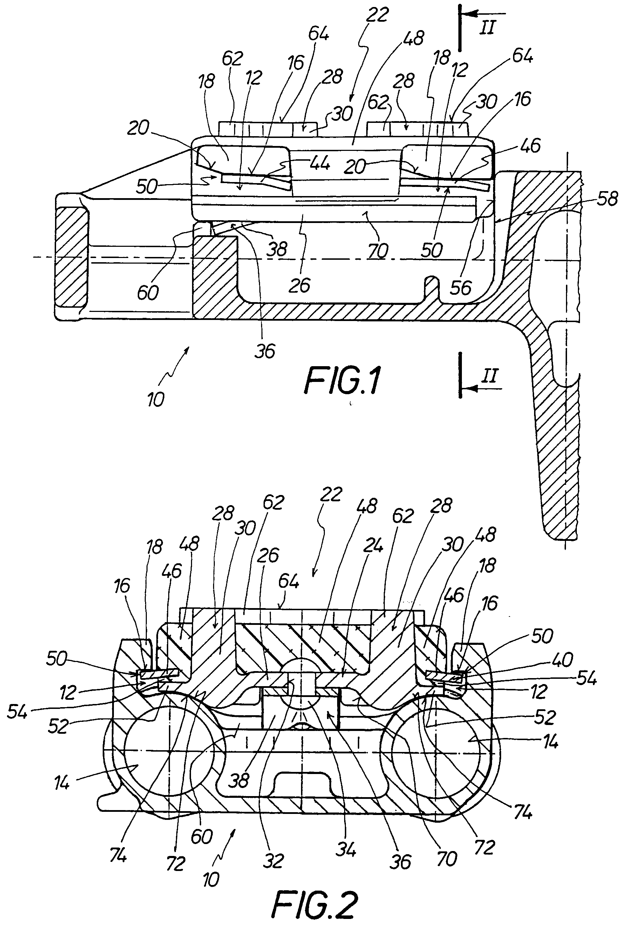

Die Figuren 1 und 2 zeigen ein Gleiskettenglied 10, das vorzugsweise aus einem Gußwerkstoff besteht und das - wie aus Fig. 2 ersichtlich ist - sich gegenüberliegende, einander zugewandte Führungsnuten 12 aufweist. Die Führungsnuten 12 sind in der Nachbarschaft zweier Bohrlöcher 14 des Gleiskettengliedes 10 vorgesehen und in die gleiche Richtung wie diese orientiert. Die Führungsnuten 12 weisen außenseitig Anlageflächen 16 auf, die an der Unterseite von Ansätzen 18 (sh. Fig. 1) vorgesehen sind.

Die Anlageflächen 16 an der Unterseite der Ansätze 18 sind zur Außenseite des Gleiskettengliedes 10 hin mit keilförmig erweiterten Flächenabschnitten 20 ausgebildet, durch welche das Aufschieben eines Aufschiebestückes 22 auf das entsprechende Gleiskettenglied 10 vereinfacht wird.

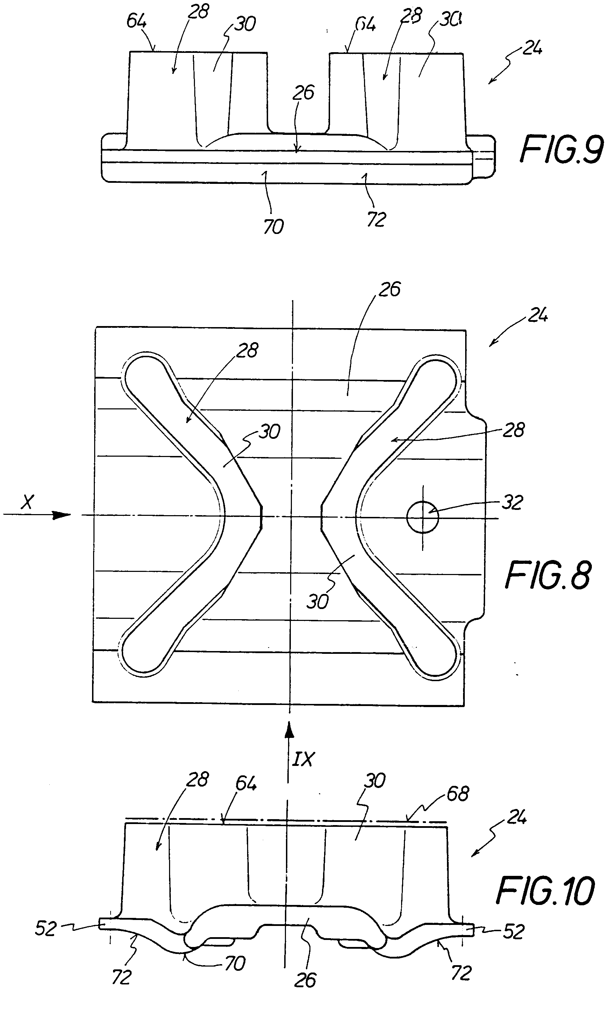

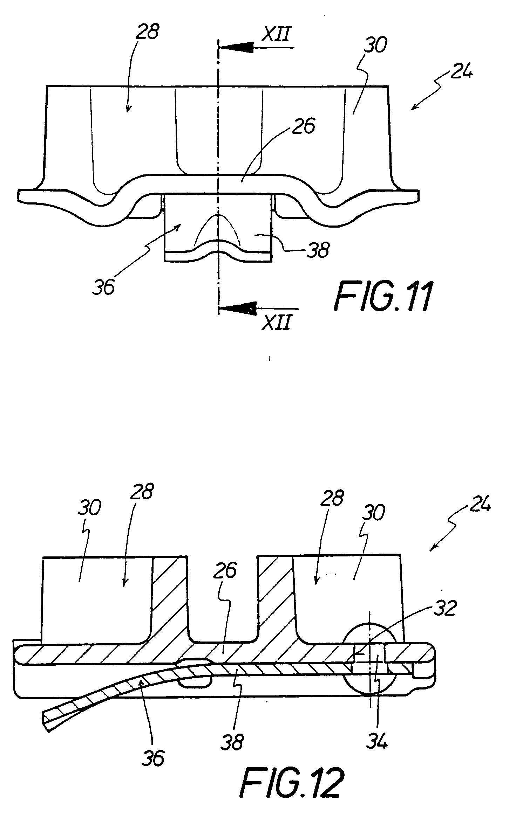

Das Aufschiebestück 22 weist, wie aus Fig. 2 deutlich ersichtlich ist, einen Gleitschutzträgerkörper 24 mit einer Basis 26 und einer von der Basis 26 einstückig nach außen ragenden Profilrippung 28 auf. Ein solcher Gleitschutzträgerkörper 24 ist in den Figuren 8, 9 und 10 verdeutlicht. Wie aus den Figuren 8 und 9 deutlich ersichtlich ist, weist die Profilrippung 28 zwei voneinander beabstandete Profilrippenelemente 30 auf. Die Basis 26 des Gleitschutzträgerkörpers 24 ist außerdem mit einem Loch 32 (sh. Fig. 8) ausgebildet, das zur Aufnahme eines Niets 34 (sh. Fig. 12) vorgesehen ist. Mit Hilfe des Nietes 34 ist an der Unterseite der Basis 26 ein federndes Fixierelement 36 befestigt. Das Fixierelement 36 ist als abgebogene streifenförmige Zunge 38 ausgebildet, wie aus den Figuren 11 und 12 ersichtlich ist.

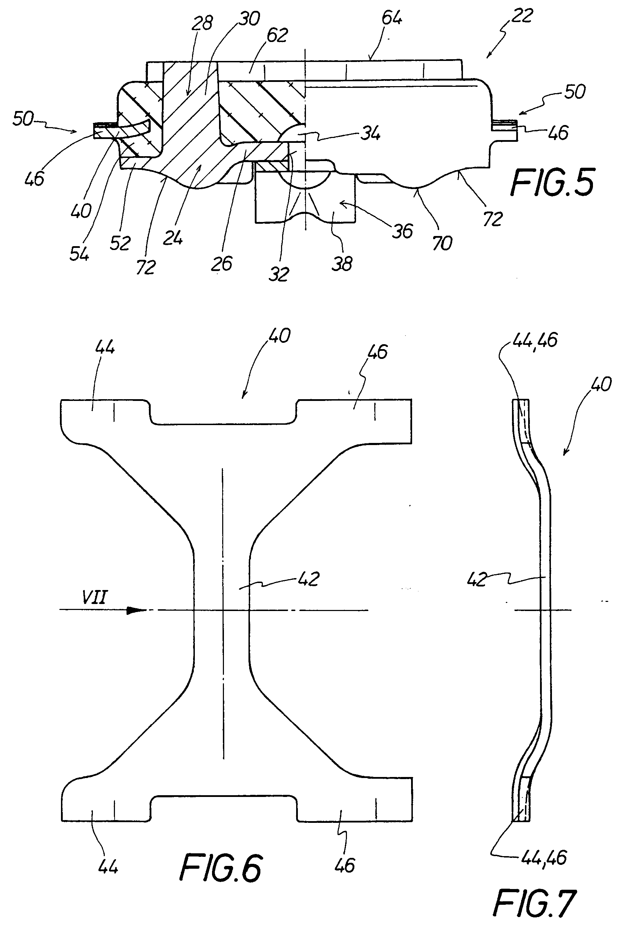

Auf der Oberseite der Basis 26 ist ein Zwischenblech 40 (sh. die Figuren 6 und 7) angeordnet, das zwischen den voneinander beabstandeten Profilrippenelementen 30 der von der Basis 26 des Gleitschutzträgerkörpers 24 integral wegstehenden Profilrippung 28 positioniert bzw. lokalisiert ist. Zu diesem Zwecke ist das Zwischenblech 40 mit einem Mittelsteg 42 ausgebildet, dessen Breite an den lichten Abstand zwischen den beiden Profilrippenelementen 30 des Gleitschutzträgerkörpers 24 angepaßt ist. Das Zwischenblech 40 ist mit Flächenabschnitten 44 und 46 ausgebildet.

Wie aus Fig. 2 ersichtlich ist, ist die Basis 26 des Gleitschutzträgerkörpers 24 außenseitig bis zu einer bestimmten Höhe mit einem Elastomerkörper 48 bedeckt, in welchen das Zwischenblech 40 einvulkanisiert ist. Der Elastomerkörper 48 ist derartig ausgebildet, daß aus ihm die Führungsorgane 50 bildenden Flächenabschnitte 44 und 46 des Zwischenbleches 40 herausragen. Die Flächenabschnitte 44 und 46 des Zwischenbleches 40 sind von benachbarten Randabschnitten 52 der Basis 26 des Gleitschutzträgerkörpers 24 durch Abschnitte 54 des Elastomerkörpers 48 beabstandet. Diese Abschnitte 54 des Elastomerkörpers 48 bilden Federelemente, mittels welchen die Flächenabschnitte 44 und 46 des Zwischenbleches 40 federnd gegen die zugehörigen Anlageflächen 16 der Führungsnuten 12 gedrückt werden.

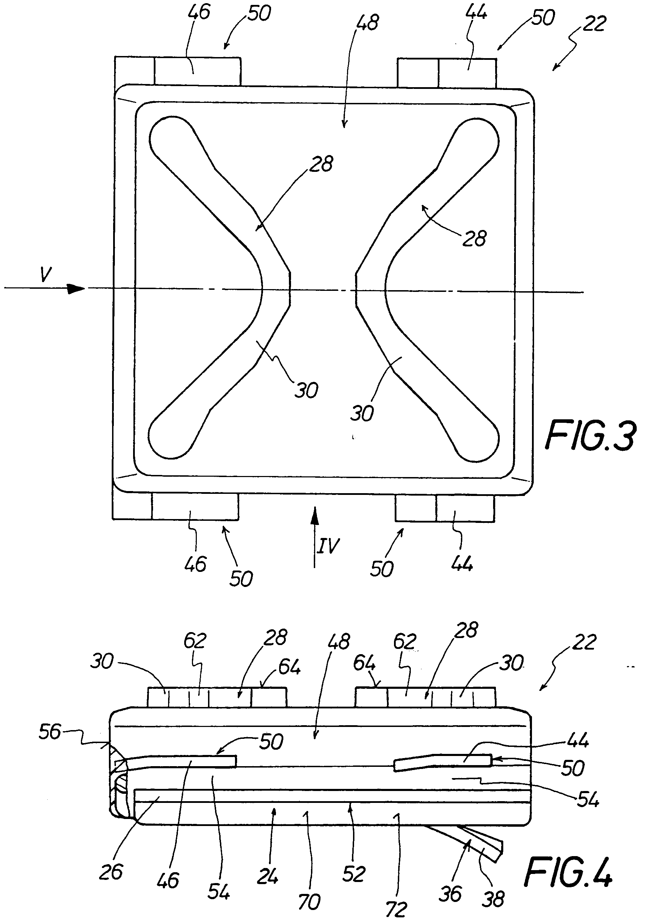

Um das Aufschieben des Aufschiebestückes 22 auf das Gleitkettenglied 10 weiter zu vereinfachen, sind die Flächenabschnitte 44 und 46 des Zwischenbleches 40 abgewinkelt profiliert ausgebildet, wie aus den Figuren 1 und 4 ersichtlich ist. Die Aufschiebebewegung des Aufschiebestückes 22 auf das Gleiskettenglied 10 wird dadurch begrenzt, daß das Aufschiebestück 22 mit seiner Stirnfläche 56 an einer Anlagefläche 58 des Gleiskettengliedes 10 (sh. Fig. 1) zur Anlage kommt. Eine Beweglichkeit des Aufschiebestückes 22 in dieser aufgeschobenen Endposition wird dadurch verhindert, daß das federnde Fixierelement 36 an einem Widerlagerorgan 60 des Gleiskettengliedes 10 spielfrei federnd zur Anlage kommt.

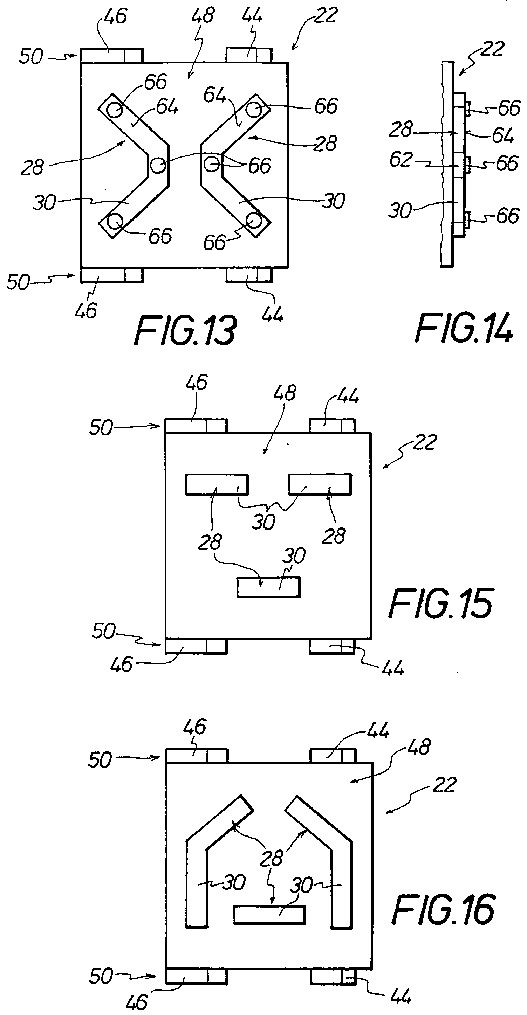

Die Profilrippung 28 steht mit einem Vorderabschnitt 62 aus dem Elastomerkörper 48 vor. Diese Vorderabschnitte 62 der Profilrippenelemente 30 der Profilrippung 28 können mit einer ebenen Lauffläche 64 ausgebildet sein, die Laufflächen 64 der Profilrippenelemente 30 der Profilrippung 28 können jedoch auch mit Noppen 66 ausgebildet sein, wie aus den Figuren 13 und 14 ersichtlich ist. Die eben oder mit Noppen 66 ausgebildete Lauffläche 64 der Profilrippung 28 ist vorzugsweise randschichtgehärtet, was in Fig. 10 durch die strichpunktierte Linie 68 angedeutet ist.

Aus Fig. 2 ist desweiteren ersichtlich, daß die Innenseite 70 der Basis 26 des Gleitschutzträgerkörpers 24 im Bereich der zu den Führungsorgane 50 bildenden Flächenabschnitte 44 und 46 benachbarten Randabschnitte 52 konkav gewölbte Anlageflächen 72 aufweist, die an konvex gewölbte Anlageflächen 74 des Gleiskettengliedes 10 angepaßt sind. Die konvex gewölbten Auflageflächenabschnitte 74 resultieren aus den entsprechenden Rohrabschnitten der Bohrlöcher 14 des Gleiskettengliedes 10.

Gleiche Einzelheiten sind in den Figuren jeweils mit denselben Bezugsziffern bezeichnet, so daß es sich erübrigt, in Verbindung mit allen diesen Figuren alle Einzelheiten jeweils detailliert zu beschreiben.

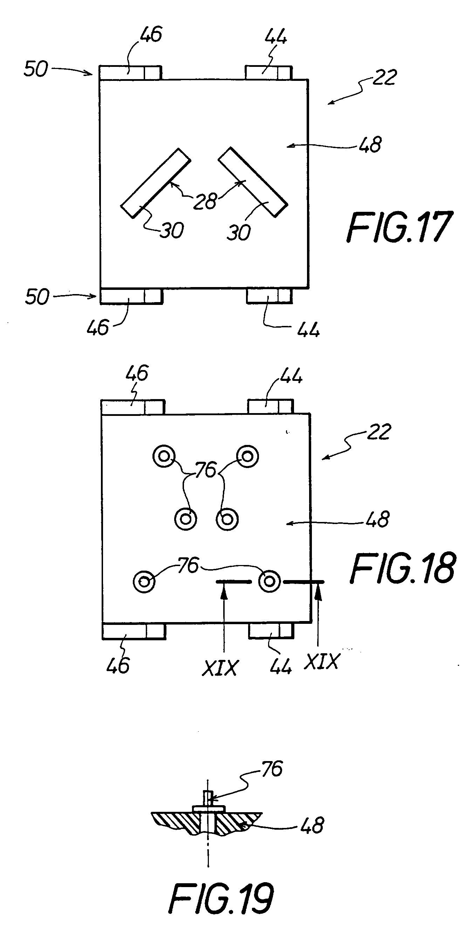

Fig. 15 zeigt ein Aufschiebestück 22 mit drei Profilrippenelementen 30, die voneinander beabstandet sind. Demgegenüber zeigt die Fig. 16 eine Ausbildung des Aufschiebestückes 22, das voneinander beabstandet zwei einander abgewinkelt zugewandte Profilrippenelemente 30 sowie ein Profilrippenelement 30 aufweist, wobei letzteres zwischen den beiden abgewinkelten Profilrippenelementen 30 mittig vorgesehen ist. Die Fig. 17 zeigt ein Aufschiebestück 22 mit zwei voneinander beabstandeten und einander zugewandten Profilrippenelementen 30. Fig. 18 verdeutlicht ein Aufschiebestück 22, bei welchem von der Basis 26 keine Profilrippung 28 nach außen ragt, sondern bei welchem auf die Basis 26 ein Elastomerkörper 48 allein aufvulkanisiert ist, aus welchem die Führungsorgane 50 bildenden Flächenabschnitte 44 und 46 herausragen. Im Elastomerkörper 48 sind Stifte 76 bspw. nach Art von Spikes fixiert, wie sie bei Winterreifen von Kraftfahrzeugen bekannt sind.

## Patentansprüche

1. Aufschiebestück für ein Gleiskettenglied (10), wobei das Gleiskettenglied (10) mit sich gegenüberliegenden, einander zugewandten Führungsnuten (12) ausgebildet ist, die außenseitig jeweils durch eine Anlagefläche (16) begrenzt sind, und das Aufschiebestück (22) voneinander abgewandte Führungsorgane (50) aufweist, die in die Führungsnuten (12) hineinstehen und mittels eines Elastomerkörpers (48) elastisch gegen die jeweils zugehörige Anlagefläche (16) gezwängt sind,
**dadurch gekennzeichnet,**
daß das Aufschiebestück (22) einen Gleitschutzträgerkörper (24) mit einer Basis (26) und ein an der Basis (26) angeordnetes Zwischenblech (40) aufweist, das mit Flächenabschnitten (44, 46) aus dem die Basis (26) außenseitig bis zu einer bestimmten Höhe bedeckenden Elastomerkörper (48) seitlich herausragt, wobei die die Führungsorgane (50) bildenden Flächenabschnitte (44, 46) des Zwischenbleches (40) von benachbarten Randabschnitten (52) der Basis (26) durch Federelemente bildende Abschnitte (54) des Elastomerkörpers (48) beabstandet sind.

2. Aufschiebestück nach Anspruch 1,
**dadurch gekennzeichnet,**
daß von der Basis (26) des Gleitschutzträgerkörpers (24) eine Profilrippung (28) nach außen ragt, die aus dem Elastomerkörper (48) mit einem Vorderabschnitt (62) vorsteht.

3. Aufschiebestück nach Anspruch 1 und 2,
**dadurch gekennzeichnet,**
daß die Profilrippung (28) mindestens zwei voneinander beabstandete, von der Basis (26) wegstehende Profilrippenelemente (30) aufweist, und das Zwischenblech (40) mit einer derartigen Grundflächengestalt ausgebildet ist, daß es zwischen den Profilrippenelementen (30) lokalisiert ist.

4. Aufschiebestück nach Anspruch 1 oder 3,
**dadurch gekennzeichnet,**
daß das Zwischenblech (40) in den mit dem Gleitschutzträgerkörper (24) zusammenvulkanisierten Elastomerkörper (48) einvulkanisiert ist.

5. Aufschiebestück nach einem der Ansprüche 1 bis 4,
**dadurch gekennzeichnet,**
daß die die Führungsorgane (50) bildenden, aus dem Elastomerkörper (48) herausragenden Flächenabschnitte (44, 46) des Zwischenbleches (40) in Aufschieberichtung abgewinkelt profiliert sind.

6. Aufschiebestück nach Anspruch 2 oder 3,
**dadurch gekennzeichnet,**
daß die Lauffläche (64) der Profilrippung (28) eben ausgebildet ist.

7. Aufschiebestück nach Anspruch 2 oder 3,
**dadurch gekennzeichnet,**
daß die Lauffläche (64) der Profilrippung (28) mit Noppen (66) ausgebildet ist.

8. Aufschiebestück nach Anspruch 6 oder 7,
**dadurch gekennzeichnet,**
daß die Lauffläche (64) der Profilrippung (28) randschichtgehärtet ist.

9. Aufschiebestück nach einem der vorhergehenden Ansprüche,
**dadurch gekennzeichnet,**
daß an der Innenseite (70) der Basis (26) ein mit einem Widerlagerorgan (60) des Gleiskettengliedes (10) zusammenwirkendes federndes Fixierelement (36) befestigt ist.

10. Aufschiebestück nach einem der vorhergehenden Ansprüche,
**dadurch gekennzeichnet,**
daß die Innenseite (70) der Basis (26) im Bereich der zu den Führungsorganen (50) benachbarten Randabschnitte (52) mit konkav gewölbten Anlageflächen (72) ausgebildet sind, die an konvex gewölbte Auflageflächenabschnitte (74) des Gleiskettengliedes (10) angepaßt sind.

## Claims

1. Slide-on piece for a crawler chain link (10), the crawler chain link (10) being provided with guiding grooves (12) lying opposite one another and turned towards one another, these guiding grooves (12) in each case being limited on the outside by a bearing surface (16) and the slide-on piece (22) having guiding components (50) which are turned away from one another and which fit into the guiding grooves (12) and are elastically squeezed against the respective appertaining bearing surface (16) by means of an elastomeric element (48),
**characterized in that**
the slide-on piece (22) has a non-slip carrier element (24) with a base (26) and an intermediate plate (40) which is located on the base (26) and which projects laterally by means of surface portions (44, 46) from the elastomeric element (48) which covers the base (26) on the outside up to a certain level, the surface portions (44, 46) of the intermediate plate (40) which form the guiding components (50) being spaced from adjacent peripheral portions (52) of the base (26) by means of portions (54) of the elastomeric element (48) which form spring elements.

2. Slide-on piece according to Claim 1,
**characterized in that,**
from the base (26) of the non-slip carrier element (24), a profiled ribbing (28) juts outwards which protrudes from the elastomeric element (48) by means of a front portion (62).

3. Slide-on piece according to Claim 1 and 2,
**characterized in that**
the profiled ribbing (28) has at least two profiled rib elements (30) which are spaced apart and stand away from the base (26), and the intermediate plate (40) is designed with such a shape of the basal surface that it is localized between the profiled rib elements (30).

4. Slide-on piece according to Claim 1 or 3,
**characterized in that**
the intermediate plate (40) is vulcanized into the elastomeric element (48) which is vulcanized together with the non-slip carrier element (24).

5. Slide-on piece according to one of Claims 1 to 4,
**characterized in that**
the surface portions (44, 46) of the intermediate plate (40) which form the guiding components (50) and project from the elastomeric element (48) are profiled so as to be angled in direction of sliding on.

6. Slide-on piece according to Claim 2 or 3,
**characterized in that**
the contact surface (64) of the profiled ribbing (28) is designed so as to be flat.

7. Slide-on piece according to Claim 2 or 3,
**characterized in that**
the contact surface (64) of the profiled ribbing (28) is designed with knobs (66).

8. Slide-on piece according to Claim 6 or 7,
**characterized in that**
the contact surface (64) of the profiled ribbing (28) is surface-hardened.

9. Slide-on piece according to one of the preceding claims,
**characterized in that**
a springy fixing element (36) is fixed to the inside (70) of the base (26), this fixing element (36) co-operating with a supporting component (60) of the crawler chain link (10).

10. Slide-on piece according to one of the preceding claims,
**characterized in that,**
in the region of the peripheral portions (52) adjacent to the guiding components (50), the inside (70) of the base (26) is designed with concavely curved bearing surfaces (72), which are adapted to convexly curved portions (74) of the bearing surface of the crawler chain link (10).

## Revendications

1. Pièce à enfiler pour un maillon de chenille (10), le maillon de chenille (10) présentant des rainures de guidage (12) opposées, tournées l'une vers l'autre, qui sont limitées chacune extérieurement par une surface d'application (16) et la pièce à enfiler (22) présentant des organes de guidage (50) tournés à l'opposé l'un de l'autre, qui se rentrent à l'intérieur des rainures de guidage (12) et qui sont forcés élastiquement au moyen d'un corps élastomère (48) contre la surface d'application (16) correspondante, caractérisée en ce que la pièce à enfiler (22) présente un corps de support antidérapant (24) avec une base (26) et une tôle intermédiaire (40) disposée sur la base (26), laquelle tôle ressort latéralement, par des portions de surface (44, 46), du corps élastomère (48) recouvrant extérieurement la base (26) jusqu'à une hauteur déterminée, tandis que les portions de surface (44, 46) de la tôle intermédiaire (40) formant les organes de guidage (50) sont espacées de portions de bordure (52) voisines de la base (26), par des portions (54) du corps élastomère (48) formant des éléments à ressort.

2. Pièce à enfiler selon la revendication 1, caractérisée en ce que de la base (26) du corps de support antidérapant (24) s'étend vers l'extérieur un nervurage profilé (28), qui dépasse du corps élastomère (48) par une portion avant (62).

3. Pièce à enfiler selon les revendications 1 et 2, caractérisée en ce que le nervurage profilé (28) présente au moins deux éléments à nervures profilées (30) espacés l'un de l'autre et éloignés de la base (26); et en ce que la tôle intermédiaire (40) présente une forme de surface de base telle qu'elle est localisée entre les éléments à nervures profilées (30).

4. Pièce à enfiler selon la revendication 1 ou 3, caractérisée en ce que la tôle intermédiaire (40) est placée par vulcanisation dans le corps élastomère (48) assemblé par vulcanisation avec le corps de support antidérapant (24).

5. Pièce à enfiler selon l'une des revendications 1 à 4, caractérisée en ce que les portions de surface (44, 46) de la tôle intermédiaire (40), formant les organes de guidage (50) et ressortant du corps élastomère (48), sont profilées coudées dans le sens d'enfilage.

6. Pièce à enfiler selon la revendication 2 ou 3, caractérisée en ce que la surface de roulement (64) du nervurage profilé (28) est plane.

7. Pièce à enfiler selon la revendication 2 ou 3, caractérisée en ce que la surface de roulement (64) du nervurage profilé (28) présente des boutons (66).

8. Pièce à enfiler selon la revendication 6 ou 7, caractérisée en ce que la surface de roulement (64) du nervurage profilé (28) est durcie en surface sur son bord.

9. Pièce à enfiler selon l'une des revendications précédentes, caractérisée en ce que sur le côté intérieur (70) de la base (26) est fixé un élément de fixation (36) élastique, coopérant avec un organe de butée (60) du maillon de chenille (10).

10. Pièce à enfiler selon l'une des revendications précédentes, caractérisée en ce que le côté intérieur (70) de la base (26) présente, dans la région des portions de bordure (52) voisines des organes de guidage (50), des surfaces d'application (72) concaves qui sont adaptées à des portions de surface d'appui (74) convexes du maillon de chenille (10).
